Europäisches Patentamt

European Patent Office

Office européen des brevets

(19)

(11) Veröffentlichungsnummer : **0 142 115**
**B1**

(12) **EUROPÄISCHE PATENTSCHRIFT**

(45) Veröffentlichungstag der Patentschrift :
06.05.87

(21) Anmeldenummer : 84113337.4

(22) Anmeldetag : 06.11.84

(51) Int. Cl.⁴ : **B 60 B 21/02**, B 60 B 21/10

(54) Fahrzeugrad.

(30) Priorität : 12.11.83 DE 3341043

(43) Veröffentlichungstag der Anmeldung :
22.05.85 Patentblatt 85/21

(45) Bekanntmachung des Hinweises auf die Patenterteilung : 06.05.87 Patentblatt 87/19

(84) Benannte Vertragsstaaten :
AT BE CH DE FR GB IT LI LU NL SE

(56) Entgegenhaltungen :
EP-A- 0 012 694
EP-B- 0 105 204
AU-B-  521 469
DE-A- 3 000 428
DE-A- 3 019 742
DE-A- 3 201 985

(73) Patentinhaber : Continental Gummi-Werke Aktiengesellschaft
Königsworther Platz 1
D-3000 Hannover 1 (DE)

(72) Erfinder : Frerichs, Udo, Dipl.-Ing.
Buchenweg 7
D-3012 Langenhagen 8 (DE)
Erfinder : Rach, Heinz-Dieter, Dipl.-Ing.
Planetenring 32
D-3008 Garbsen 1 (DE)
Erfinder : Klose, Hans-Ulrich, Dipl.-Ing.
Hauptstrasse 15
D-3061 Wiedensahl (DE)

**Beschreibung**

Die Erfindung betrifft ein luftbereiftes Fahrzeugrad mit einer starren Felge und mit einem Fahrzeugluftreifen aus Gummi oder gummiähnlichen Kunststoffen, der eine Karkasse aufweist, die in Wülsten mittels zug- und/oder druckfester Wulstkerne verankert ist, bei dem die Felge seitlich außen Felgenhörner und neben diesen Sitzflächen für die Reifenwülste aufweist und bei dem die Felge auf der radial äußeren Seite mit Notlaufstützflächen für die Reifeninnenwand versehen ist.

Ein solches Fahrzeugrad, bei dem sich die Felgenhörner nach radial innen erstrecken und bei dem die Reifenwülste am radial inneren Umfang der Felge angeordnet sind, ist bereits vorgeschlagen worden (DE-A-3 000 428, DE-A-3 019 742). Es eignet sich außer für einen normalen Fahrbetrieb mit einem aufgepumpten Reifen auch für einen sogenannten Notlaufbetrieb, bei dem der Reifen im Defektfall mit entwichener Luft noch in einem beträchtlichen Umfang gefahren werden kann, ohne dauerhaften Schaden zu nehmen. Dies wird vor allem dadurch erreicht, daß die Felge auf der radial äußeren Seite Stützflächen zum Abstützen des Reifens aufweist und daß der Reifen nach seitlich außen auswölben kann, so daß er bei einem Notlauf mit seinen Seitenwandteilen die Fahrbahn nicht berührt.

Bei den Fahrzeugrädern der eingangs genannten Art mit den relativ großen Durchmessern der Felgenstützflächen können sich Schwierigkeiten bei der Reifenmontage dadurch ergeben, daß jeweils ein Reifenwulst in die Nähe eines Felgenhorns gebracht werden muß, d. h. daß einer der beiden Reifenwülste den mittleren Bereich der Felge überwinden muß. Dieses Problem wiegt um so größer, als bei den Rädern der eingangs genannten Art die Felge in der Regel kein übliches Tiefbett auf der radial äußeren Seite aufweist, so daß ein Einbringen des einen Reifenwulstes in ein Tiefbett zur Überwindung des mittleren Felgenbereichs auf übliche Weise unmöglich ist.

Der Erfindung liegt deshalb die Aufgabe zugrunde, ein Fahrzeugrad der eingangs genannten Art anzugeben, bei dem der Reifen zuverlässig auf einer einteiligen Felge montierbar ist, die mit Stützflächen für den Reifen versehen ist.

Diese Aufgabe wird erfindungsgemäß dadurch gelöst, daß für eine Montagefähigkeit des Reifens durch im wesentlichen senkrechtes Aufeinanderzubewegen von Reifen und/oder Felge und durch anschließendes Drehen der Felge im Reifeninnenraum die durch die Rotationsachse der Felge führende Felgenhüllkurve eine Umfangslänge aufweist, die höchstens dem 0,96-fachen der radial inneren Reifenumfangslänge im Wulstbereich (Wulstinnenumfang WU) in der Montagestellung des Reifens entspricht.

Im Rahmen dieser Anmeldung soll unter Felgenhüllkurve H eine Kurve verstanden werden, die ein Bindfaden einnimmt, der quer zur Felgenumfangsrichtung am größten Durchmesser der Felge straff um diese gelegt wird. Weiterhin wird unter Wulstinnenumfang WU der Reifenumfang im Bereich der Wülste an der Stelle des kleinsten Durchmessers (= Wulstinnendurchmesser) in der Montagestellung des Reifenwulstes verstanden.

Mit der Erfindung wird die Montage eines Reifens, soweit sie das Einbringen einer einteiligen Felge in den Innenraum eines Reifens betrifft, wesentlich vereinfacht. Eine zusätzliche Vereinfachung im Sinne eines geringeren Kraftaufwands wird dadurch erzielt, daß bereits vor dem Einbringen der Felge in den Innenraum des Reifens der Reifen in seinem einen Wulstbereich durch Außenkräfte in eine ovale Form gebracht wird.

Durch die Bemessungsvorschrift gemäß der Erfindung wird es möglich, bei Gewährleistung der Montierbarkeit des Reifens die Felgenstützfläche in axialer und radialer Erstreckung optimal zu gestalten, so daß die Notlaufeigenschaften des Rades nochmals wesentlich verbessert werden können. Weiterhin läßt sich mit der angegebenen Bemessungsvorschrift die Durchmesserdifferenz der Felge im Bereich der Felgenhörner und der Stützflächen optimieren, so daß auf der einen Seite die Felgenhörner nicht unnötig hoch gewählt werden, andererseits aber gewährleistet bleibt, daß für eine ausreichende Abwerfsicherheit die Wulstkerne hinter den Felgenhörnern genügend tief eintauchen.

Die Erfindung ist sowohl bei Fahrzeugrädern mit radial innen an der Felge befestigtem Reifen anwendbar als auch bei solchen, bei denen die Reifenwülste radial außen an der Felge angeordnet sind.

Zur Reifenmontage werden Felge und Reifen nicht in einer parallelen Stellung ihrer Rotationsachsen ineinandergeführt, sondern in einer Stellung, bei der die Rotationsachsen einen relativ großen Winkel einschließen, bevorzugt einen solchen von ca. 90°. Ein derartiges Montage verfahren wird in der EP-B-0 105 204 vorgeschlagen.

Nachfolgend werden zwei Ausführungsbeispiele der Erfindung anhand einer Zeichnung beschrieben. Es zeigt schematisch

Figur 1   einen Reifen mit seitlich ausgeklappten Seitenwänden und eine teilweise in den Reifen eingeführte Felge,

Figur 2   einen Reifen mit nach innen gewölbten Seitenwänden und Wülsten und eine teilweise in den Reifen eingeführte Felge,

Figur 3   Reifen und Felge in der Stellung der Fig. 1 in einer Draufsicht,

Figur 4   ein Rad mit dem vollständig montierten Reifen in einem radialen Teilschnitt,

Figur 5   eine Felge in einem radialen Teilschnitt mit einer eingezeichneten Hüllkurve und einer zugeordneten 0-förmigen Wulstinnenumfangskurve,

Figur 6 eine andere Felge mit ihrer Hüllkurve und einer zugeordneten Wulstinnenumfangskurve.

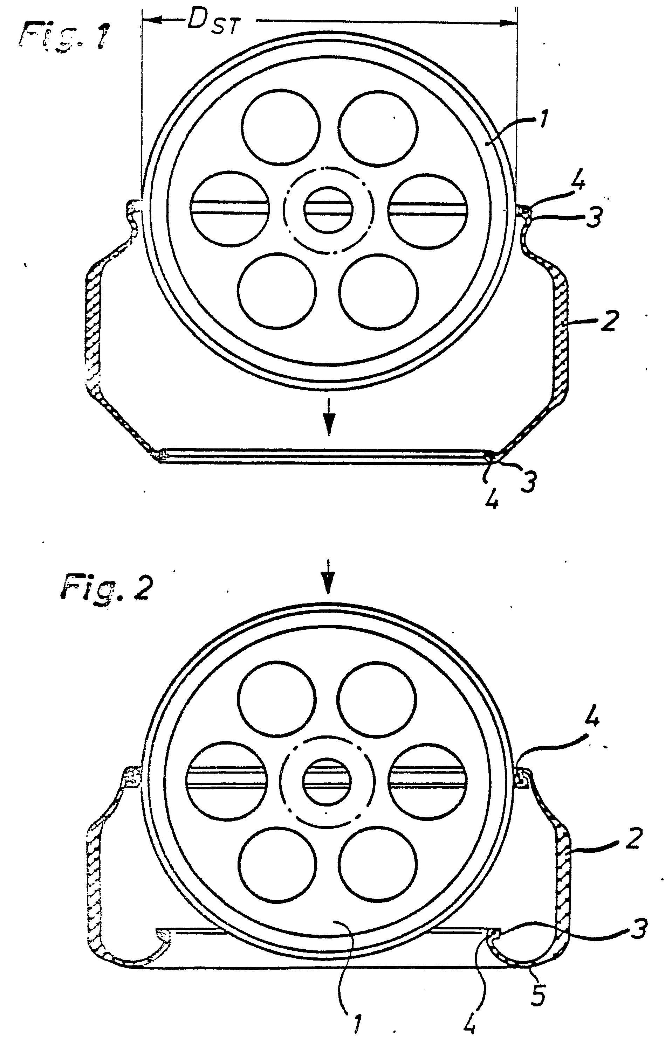

Gemäß Fig. 1 gehören zum Fahrzeugrad eine einteilige starre Felge 1 und ein Reifen 2, bei dem die Wülste 3 sehr weit auseinanderliegen.

In der Vulkanisierstellung entspricht ihr axialer Abstand etwa der zweifachen Lauffächenbreite. In den beiden Wülsten 3 befinden sich Wulstkerne 4, die zug- und/oder druckfest ausgelegt sein können. Bei Bedarf können die Wülste 3 um den Wulstkern 4 schwenkbar ausgebildet sein. Dies ist besonders bei relativ kurzen Seitenwänden erforderlich.

Beim Reifen 2 gemäß Fig. 2 sind die Seitenwände 5 und die Wülste 3 nach innen gewölbt, und der Reifen 2 wird auch in dieser Stellung montiert.

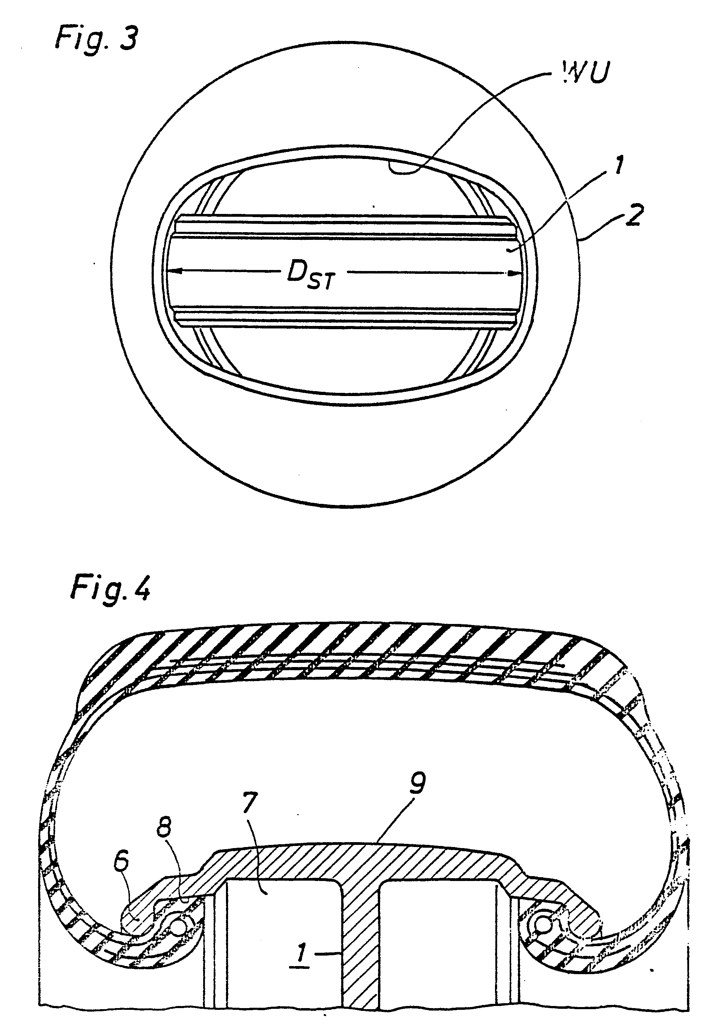

Zur Montage wird die Felge 1 mit bevorzugt senkrecht zur Drehachse des Reifens 2 stehender Drehachse gemäß Fig. 1 und 2 auf den Reifen 2 zubewegt und dann in seinen Innenraum eingeführt. Für eine maschinelle Montage kann es günstig sein, von der senkrechten Stellung der beiden Drehachsen abzuweichen. Gleichbedeutend mit der Bewegung der Felge 1 ist eine Bewegung des Reifens 2 oder eine Bewegung beider, da es nur auf die Relativbewegung ankommt. Beim Einführen der Felge 1 ist der Reifen 2 in seinem einen Wulstbereich zu einem Oval verformt, wobei die Länge des Wulstinnenumfangs WU erhalten bleibt. Besonders einfach und reifenschonend gestaltet sich das Einführen der Felge 1, wenn die Verformung des Reifens 2 bereits vor dem Einführen der Felge 1 durch Außenkräfte vorgenommen wird, z. B. durch ein Einspannen des Reifens mittels einer Haltevorrichtung. Die ovale Verformung des Reifens 2 in seinem einen Wulstbereich ist besonders gut in Fig. 3 zu erkennen, die eine Draufsicht auf Reifen 2 und Felge 1 gemäß Fig. 1 darstellt. Der größte Durchmesser der Felge 1 ist gleichzeitig der maximale Stützflächendurchmesser $D_{ST}$.

Wenn die Felge 1 mit ihrem größten Durchmesser $D_{ST}$ den Reifeninnenraum erreicht hat, wird sie gedreht, bis ihre Drehachse parallel zur Drehachse des Reifens 2 verläuft. Die weitere Montage des Reifens, d. h. das Überwinden der Felgenhörner 6 (Fig. 4) mit Hilfe von Montagevertiefungen 7 (Hochbett) und das Aufbringen der Reifenwülste 3 auf die Felgensitzflächen 8 geschieht in bekannter Weise und ist z. B. in der DE-OS-3 000 428 beschrieben.

Fig. 4 zeigt den fertig montierten Reifen auf einer einteiligen Felge 1, die Radial nach innen sich erstreckende Felgenhörner 6, daneben auf der radial inneren Seite der Felge 1 Sitzflächen 8 für den Reifen 2, daneben Montagevertiefungen 7 und auf der radial äußeren Seite eine umlaufende Stützfläche 9 für den Reifen 2 aufweist.

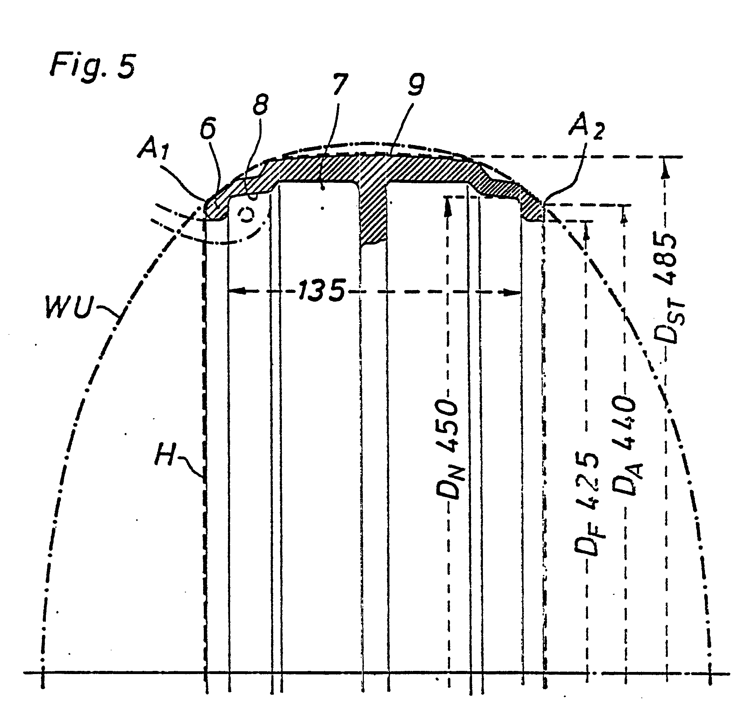

Um auf der einen Seite eine Montierbarkeit des Reifens 2 zu gewährleisten, andererseits die Felgenstützflächen 9 in ihrer radialen und axialen Erstreckung optimal wählen zu können, ist eine bestimmte Zuordnung von Reifenwulstinnenumfang WU zur Länge der Felgenhüllkurve H erforderlich (Fig. 5). Es ist zunächst ohne weiteres ersichtlich, daß eine theoretische Grenze dadurch gegeben ist, daß die Felgenhüllkurve H niemals länger sein darf als der Reifenwulstinnenumfang WU. In die Länge der Felgenhüllkurve H geht aber unmittelbar der maximale Stützflächendurchmesser $D_{ST}$ und die Maulweite der Felge ein. Auf der anderen Seite ist eine Grenze dadurch gegeben, daß die Kernringmittendurchmesser (= Durchmesser der Wulstkerne 4, gemessen von Querschnittsmittelpunkt zu Querschnittsmittelpunkt) etwa der Größe des von den Felgenhörnern gebildeten Durchmessers entsprechen sollten, damit die Wulstkerne 4 für eine ausreichende Abwerfsicherheit mit ihrem Querschnitt hinter den Felgenhörnern 6 genügend tief eintauchen. Bei den untersuchten PKW-Reifen wurden zug- und druckfeste Kabelkerne mit einem Querschnittsdurchmesser von ca. 7 mm verwendet.

In Fig. 5 sind die geometrischen Verhältnisse schematisch an einem Reifen der Dimension 200/45 R 450 und an einer Felge der Größe 135 × 450 dargestellt. Bei dieser Reifendimension hat sich aufgrund umfangreicher praktischer Versuche bezüglich Fahreigenschaften und Notlaufeigenschaften des PKW-Fahrzeugrads ein Stützflächendurchmesser von $D_{ST}$ = 485 mm als optimal erwiesen, d. h. ein um 35 mm gegenüber dem Nenndurchmesser $D_N$ = 450 mm erhöhter Durchmesser.

Zur Ermittlung der Länge der Felgenhüllkurve H kann man seitlich außen an der breitesten Stelle der Felge 1 (= Maulweite + 2 × Wandstärke) Hilfspunkte $A_1$, $A_2$ einzeichnen, so daß sich die Hüllkurve H aus dem zweifachen Durchmesser 2 × $D_A$ und der zweifachen Bogenlänge 2 × $\overline{A_1A_2}$ zusammensetzt, wobei unter Bogenlänge eine von einem zwischen $A_1$ und $A_2$ gespannten Faden eingenommene Kurve zu verstehen ist. Mit $D_A$ = 440 mm ergibt sich für die Länge der Hüllkurve

$$H = 2 \times 440 + 2 \times 170 = 1\,220 \text{ mm.}$$

Zur Vereinfachung der Betrachtung kann man ohne Verfälschung des Ergebnisses mit dem Nenndurchmesser der Felge rechnen und bei der Bogenlänge entsprechend korrigieren :

$$H = 2 \times 450 + 2 \times 160 = 1\,220 \text{ mm.}$$

Der Wulstinnenumfang WU des verwendeten Reifens beträgt 1 303 mm (Wulstinnendurchmesser 415 mm), so daß sich für das Verhältnis von Umfangslänge der Felgenhüllkurve zu Wulstinnenumfang ein Wert von 0,936 ergibt.

Nachstehend werden in einer Tabelle 1 Untersuchungsergebnisse von Versuchen zusammengestellt, bei denen die Montagemöglichkeit von drei Reifen der Größen 200/45 R 400, 200/45 R 425 und 200/45 R

3

450 auf Felgen der Nenndurchmesser 400, 425 und 450 und unterschiedlicher Maulweiten untersucht worden ist. Die Felgen wiesen alle einen Stützflächendurchmesser $D_{ST}$ auf, der um 35 mm über dem Nenndurchmesser $D_N$ lag. In der letzten Spalte « montierbare Maulweite » bedeutet der in Klammern gesetzte Wert, daß bei der entsprechenden Maulweite der Reifen nicht mehr oder allenfalls noch unter der Gefahr einer Reifenschädigung montiert werden kann, so daß der unmittelbar davorstehende Wert die maximale Maulweite angibt. Der vorletzten Spalte entnimmt man dann das überraschende Ergebnis, daß für alle untersuchten Reifen und Felgen eine Reifenmontierbarkeit gegeben ist, wenn das Verhältnis Felgenhüllkurvenlänge H zu Wulstinnenumfang WU kleiner oder gleich 0,96 ist.

(Siehe Tabelle 1 Seite 5 f.)

Tabelle 1 : Maulweiten montierbarer Felgen

| Felge | | Bogenlänge $\overset{\frown}{A_1 A_2}$ (mm) | Korrigierte Bogenlänge | Felgenhüll-kurve H (mm) | Reifen, Wulst-Innenumfang WU (mm) | $\dfrac{H}{WU}$ | montierbare Maulweite |
|---|---|---|---|---|---|---|---|
| Nenn-Ø $D_N$ (mm) | Maulweite (mm) | | | | | | |
| 400 | 105 | 148 | 138 | 1076 | 200/45 R 400 | 0,938 | 105 |
| | 120 | 159 | 149 | 1098 | | 0,957 | 120 |
| | 135 | 170 | 160 | 1120 | WU = 1147 | 0,976 | (135) |
| | 150 | 181 | 171 | 1142 | | 0,996 | |
| | 165 | 192 | 182 | 1164 | | 1,015 | |
| 425 | 105 | | | 1126 | 200/45 R 425 | 0,919 | 105 |
| | 120 | | | 1148 | | 0,937 | 120 |
| | 135 | | | 1170 | WU = 1225 | 0,955 | 135 |
| | 150 | | | 1192 | | 0,973 | (150) |
| | 165 | | | 1214 | | 0,991 | |
| 450 | 105 | | | 1176 | 200/45 R 450 | 0,903 | 105 |
| | 120 | | | 1198 | | 0,919 | 120 |
| | 135 | | | 1220 | WU = 1303 | 0,936 | 135 |
| | 150 | | | 1242 | | 0,953 | 150 |
| | 165 | | | 1264 | | 0,970 | (165) |

In Tabelle 2 wurde für die drei untersuchten Reifen/Felgen-Paare das Verhältnis aus Stützflächendurchmesser zu Wulstinnendurchmesser ermittelt, und es ergab sich ein mittlerer Wert von 1,18.

Tabelle 2

| Nenn-durchmesser $D_N$ (mm) | Stützflächen-durchmesser $D_{ST} = D_N + 35$ (mm) | Wulstinnen-durchmesser (mm) | Stützflächendurchmesser / Wulstinnendurchmesser |
|---|---|---|---|
| 450 | 485 | 415 | 1,17 |
| 425 | 460 | 390 | 1,18 |
| 400 | 435 | 365 | 1,19 |

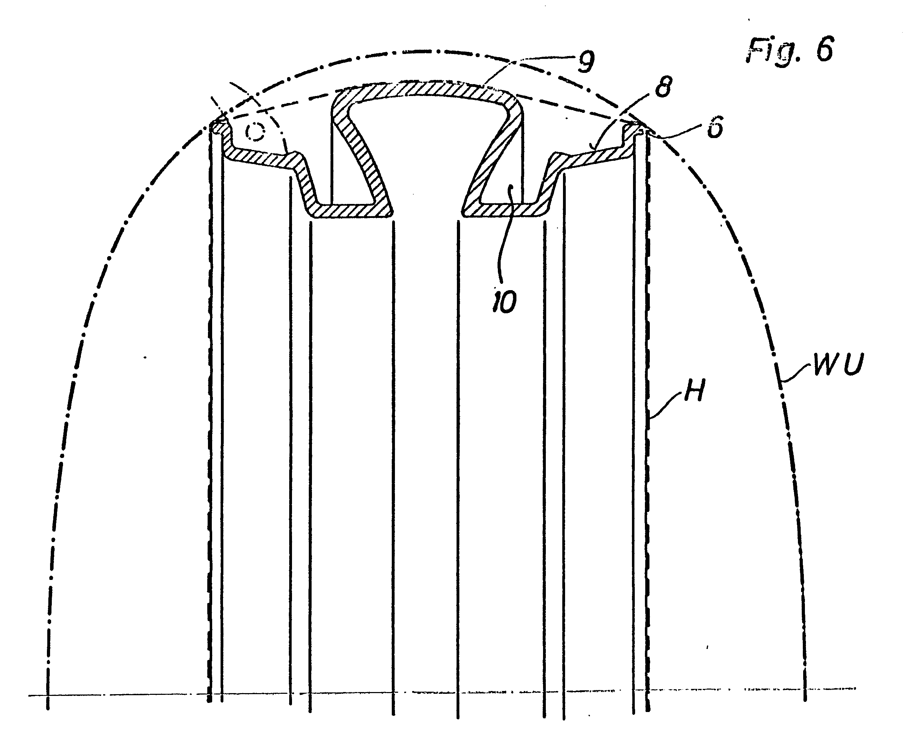

Anhand der Fig. 6 soll die Montierbarkeit eines Reifens auf einer Stützflächenfelge erläutert werden, die radial außen neben Felgenhörnern 6 Sitzflächen 8 für die Reifenwülste aufweist. Zunächst wird wieder in der oben beschriebenen Weise die Felge nahezu senkrecht in den Innenraum eines Reifens eingeführt. Damit dies überhaupt möglich ist, muß wiederum gelten

$$\frac{\text{Länge der Felgenhüllkurve}}{\text{Reifenwulstinnenumfang}} \leq 0,96.$$

Für die Auslegung der Felgenstützfläche 9 lassen sich die Ergebnisse der Tabelle 2 heranziehen, so daß der maximale Stützflächendurchmesser $D_{ST}$ etwa dem 1,18-fachen des Wulstinnendurchmessers des Reifens entsprechen sollte.

Nachdem die Felge sich mit größten Durchmesser vollständig im Innenraum des Reifens befindet, wird sie gedreht bis die Rotationsachsen von Reifen und Felge parallel verlaufen. Die Reifenwülste befinden sich nun seitlich außen neben den Felgenhörnern 6, und der Reifen wird mit Hilfe der beiden Tiefbetten 10 in üblicher Weise fertigmontiert.

**Patentansprüche**

1. Luftbereiftes Fahrzeugrad mit einer einteiligen, starren Felge (1) und mit einem Fahrzeugluftreifen (2) aus Gummi oder gummiähnlichen Kunststoffen, der eine Karkasse aufweist, die in Wülsten (3) mittels zug- und/oder druckfester Wulstkerne (4) verankert ist, bei dem die Felge seitlich außen Felgenhörner (6) und neben diesen Sitzflächen (8) für die Reifenwülste (3) aufweist und bei dem die Felge auf der radial äußeren Seite mit Notlaufstützflächen (9) für die Reifeninnenwand versehen ist, dadurch gekennzeichnet, daß für eine Montagefähigkeit des Reifens durch im wesentlichen senkrechtes Aufeinanderzubewegen von Reifen (2) und/oder Felge (1) und durch anschließendes Drehen der Felge (1) im Reifeninnenraum die durch die Rotationsachse der Felge (1) führende Felgenhüllkurve (H) eine Umfangslänge aufweist, die höchstens dem 0,96-fachen der radial inneren Reifenumfangslänge im Wulstbereich (Wulstinnenumfang WU) in der Montagestellung des Reifens entspricht.

2. Fahrzeugrad nach Anspruch 1, dadurch gekennzeichnet, daß die Felgenhörner (6) sich im wesentlichen radial nach innen erstrecken und daß die Sitzflächen (8) für die Reifenwülste (3) auf der radial inneren Seite der Felge (1) neben den Felgenhörnern (6) angeordnet sind.

3. Fahrzeugrad nach Anspruch 1, dadurch gekennzeichnet, daß das Verhältnis Reifenhöhe zu Reifenbreite kleiner als 0,65 ist.

4. Fahrzeugrad nach Anspruch 1 oder 2, dadurch gekennzeichnet, daß der maximale Durchmesser ($D_{ST}$) der Felge (1) im Bereich der Stützflächen (9) um ca. 35 mm größer ist als der Nenndurchmesser ($D_N$) der Felge (1).

5. Fahrzeugrad nach Anspruch 1, dadurch gekennzeichnet, daß die Felgenhörner (6) sich im wesentlichen radial nach außen erstrecken und daß sich die Sitzflächen (8) für die Reifenwülste (3) auf der radial äußeren Seite der Felge befinden.

6. Fahrzeugrad nach Anspruch 1, dadurch gekennzeichnet, daß der Durchmesser ($D_{ST}$) der Felge im Bereich der Stützfläche (9) etwa dem 1,18-fachen des Wulstinnendurchmessers des Reifens entspricht.

**Claims**

1. Vehicle wheel which is fitted with a pneumatic tyre and includes a one-piece rigid rim (1) and a pneumatic vehicle tyre (2) formed from rubber or rubber-like plastics materials and having a carcase which is secured in beads (3) by means of substantially inextensible and/or pressure-resistant bead cores (4), wherein the rim has rim flanges (6) laterally and externally and, adjacent thereto, seating surfaces (8) for the tyre beads (3), and wherein the rim is provided on the radially external side with emergency running support surfaces (9) for the internal wall of the tyre, characterised in that, to permit the tyre to be assembled by means of a substantially vertical movement of the tyre (2) and/or rim (1) relative to one another and by means of a subsequent rotation of the rim (1) in the tyre interior, the rim encasing curve (H) which extends through the axis of rotation of the rim (1) has a circumferential length which corresponds to a maximum of 0.96 times the radially internal circumferential length of the tyre in the bead region (internal circumference of the bead WU) in the assembled condition of the tyre.

2. Vehicle wheel according to claim 1, characterised in that the rim flanges (6) extend substantially radially inwardly, and in that the seating surfaces (8) for the tyre beads (3) are disposed on the radially internal side of the rim (1) adjacent to the rim flanges (6).

3. Vehicle wheel according to claim 1, characterised in that the ratio between the tyre height and the tyre width is less than 0.65.

4. Vehicle wheel according to claim 1 or 2, characterised in that the maximum diameter ($D_{ST}$) of the rim (1) in the region of the support surfaces (9) is approx. 35 mm greater than the nominal diameter ($D_N$) of the rim (1).

5. Vehicle wheel according to claim 1, characterised in that the rim flanges (6) extend substantially radially outwardly, and in that the seating surfaces (8) for the tyre beads (3) are situated on the radially external side of the rim.

6. Vehicle wheel according to claim 1, characterised in that the diameter ($D_{ST}$) of the rim in the region of the support surface (9) corresponds to approximately 1.18 times the internal diameter of the bead of the tyre.

**Revendications**

1. Roue de véhicule automobile avec une jante (1) rigide monobloc et un pneumatique (2) en caoutchouc ou matières plastiques caoutchouteuses comprenant une carcasse qui est fixée dans des bourrelets (3) par des tringles (4) résistant à la traction et/ou la compression, la jante présentant des rebords (6) latéraux extérieurs et, à côté de ces derniers, des repos (8) pour les bourrelets (3) et étant munie sur la face radiale extérieure de bases (9) d'appui de la paroi intérieure du pneumatique en cas de marche de secours, ladite roue étant caractérisée en ce que pour permettre le montage du pneumatique par rapprochement sensiblement perpendiculaire du pneumatique (2) et/ou de la jante (1), puis rotation de la jante (1) à l'intérieur du pneumatique, la courbe enveloppe (H) de la jante (1) coupant l'axe de rotation de cette dernière présente une circonférence au plus égale à 0,96 fois la circonférence radiale intérieure du pneumatique dans la zone des bourrelets (circonférence intérieure des bourrelets WU) dans la position de montage du pneumatique.

2. Roue de véhicule selon revendication 1, caractérisée en ce que les rebords (6) de la jante s'étendent à peu près radialement vers l'intérieur et que les repos (8) pour les bourrelets (3) du pneumatique sont disposés sur la face radiale intérieure de la jante (1), à côté des rebords (6).

3. Roue de véhicule selon revendication 1, caractérisée en ce que le rapport hauteur/largeur du pneumatique est inférieur à 0,65.

4. Roue de véhicule selon une des revendications 1 ou 2, caractérisée en ce que le diamètre maximal ($D_{ST}$) de la jante (1) est supérieur d'environ 35 mm au diamètre nominal ($D_N$) de la jante (1) dans la zone des bases d'appui (9).

5. Roue de véhicule selon revendication 1, caractérisée en ce que les rebords (6) de la jante s'étendent à peu près radialement vers l'extérieur et que les repos (8) pour les bourrelets (3) du pneumatique se trouvent sur la face radiale extérieure de la jante.

6. Roue de véhicule selon revendication 1, caractérisée en ce que le diamètre ($D_{ST}$) de la jante est sensiblement égal à 1,18 fois le diamètre intérieur des bourrelets du pneumatique dans la zone de la base (9).

0 142 115

Fig. 1

$D_{ST}$

1

4

3

2

3
4

Fig. 2

4

2

3

5

1

4

1

**Fig. 3**

$D_{ST}$

WU

1

2

**Fig. 4**

6  8  7  9

1

Fig. 5

Fig. 6